# EUROPEAN PATENT APPLICATION

(11) **EP 1 116 514 A1**
(43) Date of publication of application: **18.07.2001**
(21) Application number: 00100849.9
(22) Date of filing: 17.01.2000
(51) Int. Cl.: B01F 17/00, C02F 1/68

(54) **Dispersant compositions for treating oil slicks on water**

(71) Applicant: Fina OleoChemicals N.V., 9940 Ertvelde (BE)
(72) Inventor: Pinon, Christian, 1490 Court Saint Etienne (BE)
(74) Representative: Leyder, Francis

(57) **Abstract**

A liquid mixture consisting essentially of (i) one or more fatty esters and (ii) one or more non-ionic surface-active agents is used in treatment of oil slicks on water.

Oil slicks on water are treated essentially by:
(i) applying an effective amount of the composition to the oil slick to form a mixture of oil with said composition;
(ii) dispersing said mixture in the water.

## Description

The present invention relates to dispersant compositions for treating oil slicks on water, particularly on sea water.

Pollution of water by oil (including crude oil, fractions of crude oil and residues) caused by accidents, off-shore drilling operations, discharge of ballast water or spillage from oil tankers results in the formation of a continuous layer or slick of oil (hereinafter the oil slick) which tends to spread. This oil slick is prejudicial because it constitutes a barrier to the transfer of air and light from the atmosphere which are indispensable to support aquatic life. Also, it is preferable to treat the oil slick before it reaches the shore.

The more generally employed method consists in treating the oil slick with surface-active agents that disintegrate the cohesive oily film into droplets and disperse the droplets into the water column to a depth of several metres under the surface. The film is thus broken and there is again a transfer of air and light from the atmosphere whilst the dispersion of the oil into droplets makes easier the biodegradation by aquatic microorganisms.

Surface-active agents have generally been used in admixture with hydrocarbon solvents, such as paraffinic and cycloparaffinic hydrocarbons, sometimes in admixture with other solvents.

US-A-4502962 to Exxon Research & Engineering discloses a hydrocarbon solvent-based dispersant formulation and its use in the dispersion of viscous oil spills.

EP-A-0254704 to Fina Research discloses dispersing compositions for the treatment of oils slicks on water, said compositions containing essentially a mixture of surface-active compounds which are dissolved in a mixture of water and hydrocarbon solvents, the mixture of surface-active compounds comprising (a) 55-65 wt% of emulsifying agents consisting of a blend A of sorbitan monooleate and sorbitan monooleate oxyethylene derivative, said blend A having an HLB of about 8.75-9.5, and a blend B of sorbitan trioleate and sorbitan monooleate oxyethylene derivative, said blend B having a HLB of about 8-10, wherein the weight ratio of blend A to blend B is of about 0.5/1 to 4/1; and (b) 45-35 wt% of sodium dioctyl sulfosuccinate as wetting agent (calculated as dry substance).

EP-A-0398860 to Fina Research discloses dispersing compositions for the treatment of oils slicks on cold water, said compositions containing essentially a mixture of surface-active compounds comprising (a) 55-65 wt% of emulsifying agents consisting of a blend A of (i) sorbitan monooleate and/or other sorbitan monoesters of C10-C20 fatty acids and (ii) sorbitan monooleate oxyethylene derivative, said blend A having an HLB of about 8.75-9.5, and a blend B of sorbitan trioleate and sorbitan monooleate oxyethylene derivative, said blend B having a HLB of about 8-10, wherein the weight ratio of blend A to blend B is of about 0.5/1 to 4/1; and (b) 45-35 wt% of sodium dioctyl sulfosuccinate as wetting agent (calculated as dry substance), and a mixture of water and solvents, the compositions comprising essentially
- 50-60 wt% of surface-active agents;
- 10-20 wt% of water;
- 15-25 wt% of one or more hydrocarbon solvents; and
- 10-20 wt% of one or more glycol ethers of general formula HO-(CmH2mO)x-CnH2n+1, with m = 2-3, x = 1-3 and n = 1-6.

Environmental concerns and regulations presently require that no hydrocarbons be poured into nature, even when these hydrocarbons would only represent a marginal or even negligible increase of the pollution. There is thus a need in the art for hydrocarbon-free dispersant compositions for treating oil slicks.

The present invention provides a composition for use in the treatment of oil slicks on water. It also provides for the use of said composition in the treatment of oil slicks on water.

The composition of the invention essentially consists of a mixture of (i) one or more fatty esters and (ii) one or more surface-active agents.

As fatty ester, there may be used the ester of a monofunctional alcohol and a monocarboxylic fatty acid.

The monoalcohol may have from 1 to 18 carbon atoms, preferably from 1 to 8 carbon atoms, more preferably from 1 to 3 carbon atoms, and it may be linear or branched.

The monocarboxylic fatty acid may have from 6 to 22 carbon atoms, preferably from 12 to 18 carbon atoms, and it may be linear or branched. The monocarboxylic fatty acid may further contain olefinic unsaturation; saturated C12-C14 and unsaturated C16-C18 monocarboxylic fatty acids and mixtures thereof are most preferred.

The fatty ester should be liquid at the envisaged operation temperature. Preferably, the fatty ester should have a viscosity below 10 mm2/s, preferably below 5 mm2/s, at 40°C (measured according to DIN standard method 51562). Also, the ester should have a Kauri Butanol value (ASTM test method D1133) of at least 30, preferably at least 40, more preferably at least 50.

The esters to be used in the compositions of the invention have no acute toxicity (LD50 > 2000), are not irritating and are readily biodegradable. Also, they are not ecotoxic (96 hours LC50 fish > 100 mg/L), non volatile (vapour tension < 0.1 hPa at 20°C) and do not contain aromatic components.

As surface active agents (also called surfactant), there may be used any non-ionic surfactant or blend having a HLB (hydrophilic/lipophylic balance) value of minimum 7, preferably of 7 to 10, more preferably from 8 to 10, and containing no aromatic ring in its structure. The preferred surface active agents for use in the invention are selected from the group consisting of polyoxyalkylene esters of fatty acids and mixtures thereof, preferably polyoxyethylene and polyoxypropylene esters.

The surface active agents to be used in the compositions of the invention have no acute toxicity (LD50> 2000), are not irritating, non volatile (vapour tension < 0.1 hPa at 20°C), biodegradable and do not contain aromatic components.

The compositions of the invention contain at least 40 wt% of the fatty esters, preferably at least 55 wt%, more preferably at least 75 wt% and most preferably at least 90 wt%, the remainder of the composition being essentially the surfactant.

The composition must be liquid at the envisioned operation temperature. Thus, the viscosity of the composition should be of at most 80 mm2/s, preferably at most 50 mm2/s, more preferably at most 30 mm2/s, most preferably at most 10 mm2/s, measured at 40°C. The composition is not ecotoxic (96 hours-LC50-fish > 100 mg/l).

The method of the invention for treating oil slicks on water essentially consists of the steps of:
(i) externally applying an effective amount of the composition to the oil slick surface to form a mixture of oil with said composition;
(ii) dispersing said mixture in the water.

The application of the composition may be made as usual, e.g. by spraying.

The formulation has an appropriate combination of viscosity and solvency power to easily mix with the pollutant and reduce its viscosity. The resulting mixture is easily emulsified in water, thus allowing to easily disperse the oil spill (either through the natural action of the waves or artificially if natural dispersion is insufficient).

The oil spill is thus removed from the surface in the form of an oil-in-water emulsion wherein the oily phase comprises fatty esters. The dispersed state increases the accessibility to the naturally occurring bacteria that are performing the biodegradation. The biodegradability of the emulsion is increased (with respect to simple emulsions) as a result of the presence of readily biodegradable products (the fatty esters) that stimulate the metabolism of the bacteria.

The composition of the invention has no adverse effect on the aquatic life (including birds and other animals that come into contact with the water). The method of the invention allows for a faster recovery of the aquatic life.

### Example 1

There was prepared a blend of:
- 90 wt% of methyl esters of rapeseed fatty acids, commercially available from TotalFina Oleochemicals under the trade name Radia 7961 (Kauri Butanol value = 56, viscosity = 4.2 mm2/s at 40°C); and
- 10 wt% of polyoxyethylene 400 di-oleate, commercially available from TotalFina Oleochemicals under the trade name Radiasurf 7443 (HLB = 7.4)

Both components are listed in the INCI (International Nomenclature of Cosmetic Ingredients). Also, the composition is not ecotoxic (96 hours LC50 fish > 100 mg/L) and biodegradable.

The composition had a low viscosity (less than 10 mm2/s at 40°C).

An effective amount of the composition was applied to an oil slick created on water at a temperature of 10°C, which was then artificially agitated. A dispersion was readily formed, and the oil slick disappeared completely.

### Example 2

Example 1 was repeated with the following composition:
- 90 wt% of isopropyl esters of C12-C18 fatty acids (topped coconut fatty acids), available from TotalFina Oleochemicals under the trade name Radia 30106 (Kauri Butanol value = 51; viscosity = 3.5 mm2/s at 40°C); and
- 10 wt% of polyoxyethylene 400 di-oleate, commercially available from TotalFina Oleochemicals under the trade name Radiasurf 7443 (HLB = 7.4)

The composition had a viscosity of 4.5 mm2/s at 40°C.

Similar results were obtained.

## Claims

1. Composition for the treatment of oil slicks, essentially consisting of a mixture of (i) one or more fatty esters and (ii) one or more surface-active agents.

2. Composition according to claim 1, wherein the fatty ester is the ester of a monofunctional alcohol having from 1 to 18 carbon atoms and a monocarboxylic fatty acid having from 6 to 22 carbon atoms.

3. Composition according to claim 2, wherein the fatty ester is the ester of a monofunctional alcohol having from 1 to 3 carbon atoms and a monocarboxylic fatty acid selected from the group consisting of saturated acids having 12 to 14 carbon atoms, unsaturated acids having from 16 to 18 carbon atoms, and mixtures thereof.

4. Composition according to any one of claims 1 to 3, wherein the fatty ester has a viscosity below 10 mm2/s, preferably below 5 mm2/s, and /or a Kauri Butanol value of at least 30, preferably at least 40, more preferably at least 50.

5. Composition according to any one of claims 1 to 4, wherein the surface-active agent is non-ionic and has a HLB of at least 7, preferably 7 to 10, more preferably 8 to 10.

6. Composition according to claim 5, wherein the surface-active agent is selected from the group consisting of polyalkylene esters of fatty acids and mixtures thereof.

7. Composition according to any one of claims 1 to 6, wherein the fatty acid esters represent at least 40 wt%, preferably at least 55 wt%, more preferably at least 75 wt% and most preferably at least 90 wt%.

8. Composition according to any one of claims 1 to 7 having a viscosity the viscosity of at most 80 mm2/s, preferably at most 50 mm2/s, more preferably at most 30 mm2/s, most preferably at most 10 mm2/s, measured at 40°C.

9. Use of the composition according to any one of claims 1 to 8 in the treatment of oil slicks.

10. Method for treating oil slicks on water, essentially consisting of the steps of:
(i) applying an effective amount of the composition according to any one of claims 1 to 8 to the oil slick to form a mixture of oil with said composition;
(ii) dispersing said mixture in the water.
